# EUROPEAN PATENT APPLICATION

(11) **EP 4 810 319 A1**
(43) Date of publication of application: **23.09.2026**
(21) Application number: 23958851.0
(22) Date of filing: 15.11.2023
(51) Int. Cl.: B60Q 3/80

(54) **LIGHT-EMITTING DEVICE, METHOD FOR CONTROLLING LIGHT-EMITTING DEVICE, AND PROGRAM**

(71) Applicant: Pioneer Corporation, Tokyo 113-0021 (JP)
(72) Inventor: FUJIMURA, Naoki, Tokyo 113-0021 (JP); MITSUNAGA, Naoki, Tokyo 113-0021 (JP); NAGATA, Hideki, Tokyo 113-0021 (JP); SAKAI, Yoshikazu, Tokyo 113-0021 (JP); SUGURU, Mizuki, Tokyo 113-0021 (JP)
(74) Representative: Vossius & Partner Patentanwälte Rechtsanwälte mbB
(86) International application number: PCT/JP2023/041114
(87) International publication number: WO 2025/104845

(57) **Abstract**

A light emitting device (10) is provided in a vehicle. The light emitting device (10) includes the light emitting unit (120) and a control unit (130). The light emitting unit (120) emits light in correspondence with predetermined states of the vehicle. The control unit (130) controls the light emitting unit. The control unit (130) controls the light emitting unit (120) such that a boundary light emission pattern different from a first light emission pattern corresponding to a first state and a second light emission pattern corresponding to a second state among the predetermined states is inserted between the first light emission pattern and the second light emission pattern.

## Description

### TECHNICAL FIELD

The present invention relates to a light emitting device, a control method of a light emitting device, and a program.

### BACKGROUND ART

Patent Document 1 discloses a technology for making a display unit that displays information to be recognized by an occupant recognizable by the occupant in an information presentation device.

Patent Document 2 discloses a technology for a vehicle lighting device that achieves both an illumination function and an effective illumination effect by sharing a light source.

### RELATED DOCUMENT

### PATENT DOCUMENT

Patent Document 1: Japanese Laid-open Patent Publication No. 2014-240228
Patent Document 2: Japanese Laid-open Patent Publication No. 2014-189101

### SUMMARY OF THE INVENTION

### TECHNICAL PROBLEM

As in Patent Document 1 and Patent Document 2, a technology for causing a light emitting unit to emit light in a predetermined light emission pattern according to a situation of a vehicle has been disclosed. However, it is required to effectively communicate the situation of the vehicle to an occupant.

Examples of the problem to be solved by the present invention include effectively communicating a situation of a vehicle to an occupant.

### SOLUTION TO PROBLEM

The invention according to claim 1 is a light emitting device provided in a vehicle, the light emitting device including:
a light emitting unit that emits light in correspondence with predetermined states of the vehicle; and
a control unit that controls the light emitting unit,
in which the control unit controls the light emitting unit such that a boundary light emission pattern different from a first light emission pattern corresponding to a first state and a second light emission pattern corresponding to a second state among the predetermined states is inserted between the first light emission pattern and the second light emission pattern.

The invention according to claim 11 is a control method of a light emitting device provided in a vehicle, the light emitting device including a light emitting unit that emits light in correspondence with predetermined states of the vehicle, the control method including:
controlling, by a computer, the light emitting unit such that a boundary light emission pattern different from a first light emission pattern corresponding to a first state and a second light emission pattern corresponding to a second state among the predetermined states is inserted between the first light emission pattern and the second light emission pattern.

The invention according to claim 12 is a program for controlling a light emitting device provided in a vehicle, the light emitting device including a light emitting unit that emits light in correspondence with a predetermined state of the vehicle, the program causing a computer to control the light emitting unit such that a boundary light emission pattern different from a first light emission pattern corresponding to a first state and a second light emission pattern corresponding to a second state among the predetermined states is inserted between the first light emission pattern and the second light emission pattern.

### BRIEF DESCRIPTION OF THE DRAWINGS

[FIG. 1] A diagram showing an example of a functional configuration of a light emitting device according to a first embodiment.
[FIG. 2] A diagram showing a configuration example of a light emitting unit.
[FIG. 3] A diagram showing a first example of a light emission pattern according to the first embodiment.
[FIG. 4] A diagram showing a second example of a light emission pattern according to the first embodiment.
[FIG. 5] A diagram showing an example of a boundary light emission pattern according to the first embodiment.
[FIG. 6] A diagram showing a hardware configuration example of a control unit.
[FIG. 7] A flowchart showing a control example of a control unit according to the first embodiment.
[FIG. 8] A diagram showing control of a light emitting unit according to an operation example of the first embodiment.
[FIG. 9] A diagram showing control of a light emitting unit according to an operation example of a second embodiment.
[FIG. 10] A diagram showing a part of control of a light emitting unit according to the operation example of the second embodiment.
[FIG. 11] A diagram showing another part of control of a light emitting unit according to the operation example of the second embodiment.
[FIG. 12] A flowchart showing processing of a light emitting device according to a third embodiment.
[FIG. 13] A flowchart showing processing of a light emitting device according to a fourth embodiment.
[FIG. 14] A diagram showing control of a light emitting unit according to the operation example of the fourth embodiment.
[FIG. 15] A diagram showing an example of control of a light emitting unit according to a fifth embodiment.

### DESCRIPTION OF EMBODIMENTS

Hereinafter, a description will be made for an embodiment of the present invention using the drawings. In all drawings, the same components are designated by the same reference numerals, and the description thereof will not be repeated.

In the following description, each component of each device is represented as a block of a functional unit, not as a hardware unit configuration. Each component of each device is implemented by any combination of software and hardware using a CPU, a memory, a program loaded in the memory, a storage medium such as a hard disk for storing the program, and an interface for network connection of any computer. There are various modification examples in an implementation method of the component and the device.

### <First Embodiment>

### (Light Emitting Device 10)

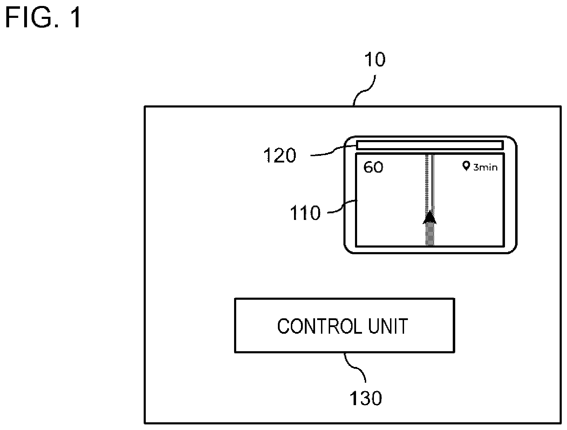

FIG. 1 is a diagram showing an example of a functional configuration of a light emitting device 10 according to the first embodiment. In the first embodiment, the light emitting device 10 is provided in a vehicle. In the first embodiment, the light emitting device 10 is disposed inside the vehicle and emits light toward an occupant space in which an occupant is seated. The light emitting device 10 includes the light emitting unit 120 and a control unit 130. The light emitting unit 120 has a plurality of the light emitting regions 122 as will be described below. The plurality of light emitting regions 122 are arranged along one direction.

For example, the light emitting device 10 is used together with a display 110. The display 110 is a part of a navigation device and performs display based on, for example, navigation information and a current position. The control unit that controls the display 110 may be the control unit 130 or may be different from the control unit 130. The display 110 may be a portable device that can be brought into the vehicle, or a display provided in, for example, a tablet terminal or a so-called smartphone.

The control unit 130 may be incorporated into the same housing as the light emitting unit 120 or may be incorporated into a separate housing from the light emitting unit 120. For example, the control unit 130 may have a function other than controlling the light emitting unit 120, for example, a wireless communication function.

The light emitting unit 120 is disposed, for example, along a width direction of the vehicle. In the example shown in FIG. 1, the light emitting unit 120 is disposed along a part of an edge of the display 110. For example, in a case where the display 110 is substantially rectangular, the light emitting unit 120 is disposed near an upper edge or a lower edge of the display 110. In a case where the light emitting unit 120 is disposed near the upper edge of the display, the occupant can recognize the light emitting unit 120 without lowering the line of sight. Therefore, in a case where the light emitting unit 120 is disposed in a driver's field of vision (also including a case of a peripheral field of vision), the driver does not need to lower the eye gaze when recognizing the light emitting unit 120, which makes it possible to suppress any obstruction to driving.

The width of the light emitting unit 120 is, for example, 50% or more and 130% or less and preferably 80% or more and 100% or less of the lateral width of the display 110. When the width of the light emitting unit 120 is within this range, it not only improves the designability but also facilitates coordination between the display content of the display 110 and a light emission pattern of the light emitting unit 120. For example, in a case where a notification icon is displayed on the upper right of the display 110, light can be turned on in the light emitting region 122 closest to this icon.

The light emitting unit 120 may be incorporated into the same housing as the display 110. In this case, the display 110 and the light emitting unit 120 may be incorporated into the vehicle or may be a portable device that can be brought into the vehicle, for example, a tablet terminal or a so-called smartphone.

Further, the light emitting unit 120 may be externally attached to a structure facing the occupant space of the vehicle, for example, a dashboard, or may be externally attached to a device having the display 110.

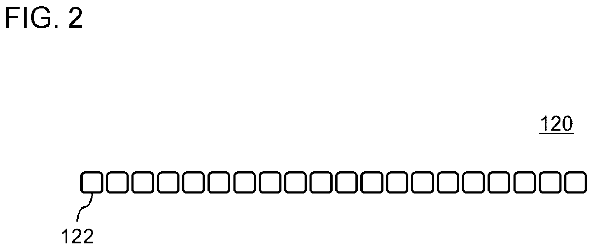

FIG. 2 is a diagram showing a configuration example of the light emitting unit 120. In the first embodiment, the light emitting unit 120 has a configuration in which the plurality of light emitting regions 122 are arranged in one column. However, the light emitting unit 120 may have a configuration in which the light emitting regions 122 are arranged in a plurality of columns, for example, n rows and m columns (n ≥ 3 and m ≥ 2). Here, m indicates the number of light emitting regions 122 in the lateral direction (width direction of the vehicle), and n indicates the number of light emitting regions 122 in the height direction of the vehicle. The plurality of light emitting regions 122 may be disposed with gaps therebetween or may be continuously disposed without gaps. In a case where the plurality of light emitting regions 122 are disposed with gaps therebetween, the gap between the adjacent light emitting regions 122 is, for example, 0.5 mm or more and 3 mm or less. The light emitting region 122 has a light emitting element, such as an LED, for example.

The light emitting unit 120 emits light in correspondence with predetermined states of the vehicle. The "predetermined state of the vehicle" is a state related to the vehicle and is also a predetermined situation of the vehicle. The "predetermined state of the vehicle" includes, for example, a state in which the vehicle approaches a right or left turn (or U-turn) point in route guidance by navigation, a state in which the vehicle is to make a right or left turn (or U-turn), a state in which the vehicle is to travel straight, a state in which another vehicle is approaching the vehicle, a state in which an object is present near the vehicle, a state in which the vehicle is decelerating (or accelerating) abruptly, a state in which the vehicle is parking (or stopping), a state in which an abnormality has occurred in the vehicle, and a steady state in which there is no information to be notified to the occupant of the vehicle. The steady state is a state in which the light emitting unit 120 emits light in a steady manner in a state in which there is no information to be notified to the occupant of the vehicle, and includes a state in which the light emitting unit 120 emits light in conjunction with playback information such as music.

### (Light emission pattern)

The light emitting unit 120 emits light in a light emission pattern corresponding to each of a plurality of predetermined states of the vehicle. The light emission pattern refers to a type of light emission of the light emitting unit 120. The light emission pattern includes a light emission aspect such as a light emission color, a light emission intensity, and a way of selecting the light emitting region 122 to be turned on (length, position, and movement of a light emission bar 124 described below) of the light emitting unit 120. For example, the control unit 130 controls a length, a position, and a movement of a light emission bar 124, which will be described below, by selecting the light emitting region 122 in which light is to be emitted. The control unit 130 controls at least one of the light emission intensity, the light emission color, and the way of selecting the light emitting region 122 to be turned on for the plurality of light emitting regions 122.

In the first embodiment, the light emission pattern includes a first light emission pattern and a second light emission pattern. The first light emission pattern is a light emission pattern corresponding to the first state among the predetermined states. The first state is a specific state of the vehicle (right or left turn, close approach, or the like), and is included in the predetermined state. The second light emission pattern is a light emission pattern corresponding to the second state among the predetermined states. The second light emission pattern is a light emission pattern different from the first light emission pattern and is a light emission pattern after the first light emission pattern. The second state is a state different from the first state and is a predetermined state after the first state.

### (First example of light emission pattern)

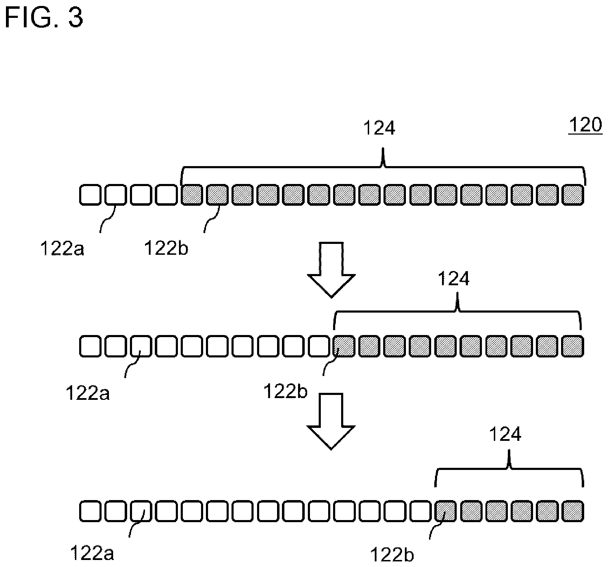

FIG. 3 is a diagram showing a first example of the light emission pattern according to the first embodiment. In the first embodiment, the light emission pattern has a pattern in a case where the vehicle approaches a point at which the vehicle is to change the traveling direction. The point at which the vehicle is to change the traveling direction is, for example, an intersection at which the vehicle is to make a right turn or a left turn, or a point at which the vehicle is to make a U-turn. The example shown in FIG. 3 is a light emission pattern indicating that the vehicle is approaching a right turn point.

In the example shown in FIG. 3, the light emitting region 122 includes a light emitting region 122a that is not turned on and a light emitting region 122b that is turned on. The control unit 130 controls the plurality of light emitting regions 122 according to a distance between the vehicle and the point. For example, the control unit 130 reduces the number of the light emitting regions 122b that are turned on (increases the number of the light emitting regions 122a that are not turned on) as the distance between the vehicle and the point is reduced.

For example, the control unit 130 controls the plurality of light emitting regions 122 to display the light emission bar 124 on the light emitting unit 120 and shortens the light emission bar 124 as the distance between the vehicle and the point decreases. In this case, for example, in a case where the point is an intersection at which the vehicle is to make a right turn or a point at which the vehicle is to make a U-turn to the right side as shown in FIG. 3, the light emission bar 124 is shortened from the left side. On the other hand, in a case where the point is an intersection at which the vehicle is to make a left turn or a point at which the vehicle is to make a U-turn to the left side, the light emission bar 124 is shortened from the right side. This is a pattern opposite to FIG. 3, with the left and right sides reversed.

### (Second Example of Light Emission Pattern)

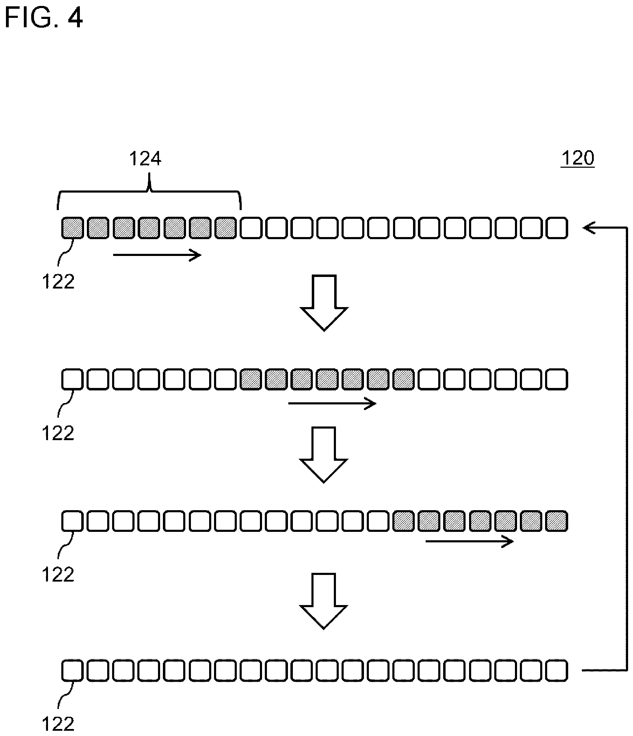

FIG. 4 is a diagram showing a second example of the light emission pattern according to the first embodiment. In the example shown in FIG. 4, the vehicle approaches an intersection at which the vehicle is to change the traveling direction to the right, and shows a light emission pattern in a case of making a right turn.

For example, the control unit 130 provides the light emission bar 124 by turning on a part of the regions of the plurality of light emitting regions 122, and controls the plurality of light emitting regions 122 such that the light emission bar 124 moves in the lateral direction (width direction of the vehicle). In this case, the control unit 130 controls the movement direction of the light emission bar 124 based on the direction in which the vehicle is to turn. For example, in a case of an intersection where a right turn needs to be made, the control unit 130 moves the light emission bar 124 from left to right. Alternatively, in a case of an intersection where a left turn needs to be made, the control unit 130 moves the light emission bar 124 from right to left.

The control unit 130 displays, for example, only one light emission bar 124. However, this number is not limited to one and may be plural. In a case where a plurality of the light emission bars 124 are provided, the control unit 130 may start display of a leading end of the next light emission bar 124 at one end part of the light emitting unit 120 immediately before a certain light emission bar 124 completes the movement, that is, in a state in which the trailing end of the light emission bar 124 remains at the other end part of the light emitting unit 120.

The visual apparent movement speed of the light emission bar 124 to be moved suitably is a constant speed. By moving at a constant speed, the occupant of the vehicle can correctly recognize the movement direction regardless of the timing at which the light emitting unit is seen.

When the light emission bar 124 has reached the end of the light emitting unit 120, the control unit 130 turns off the entire light emitting unit 120 for a predetermined time (t1 [s]), and then forms the light emission bar 124 again to move the light emission bar 124. The control unit 130 repeats this control. A length t1 [s] of the turning-off time is shorter than a length t2 [s] of the time during which the light emission bar 124 is displayed, and is, for example, 0.3 times or more and 0.7 times or less of t2 [s]. Here, it is not necessary to turn off the entire light emitting unit 120 at once. However, in a case where the turning-off is performed, the occupant can easily distinguish the current light emission pattern from other light emission patterns.

In the example shown in FIG. 4, the length of the light emission bar 124 does not change while the light emission bar 124 moves without overlapping the end of the light emitting unit 120. However, the length of the light emission bar 124 may change in conjunction with the movement of the light emission bar 124. Specifically, in a case of moving the light emission bar 124 from left to right, the control unit 130 gradually increases the number of light emitting regions 122 in which light is emitted such that the light emission bar 124 becomes longer from the left end of the light emitting unit 120, and the light emission bar 124 is moved in a direction away from the left end after the light emission bar 124 has reached a prescribed length (a state of a first row of FIG. 4). After the light emission bar 124 has reached the right end of the light emitting unit 120 (a state of a third row in FIG. 4), the control unit 130 gradually reduces the number of light emitting regions 122 in which light is emitted so that the light emission bar 124 becomes shorter toward the right end of the light emitting unit 120, and finally the entire light emitting unit 120 is turned off (a state of a fourth row of FIG. 4). In this manner, the occupant can easily recognize the movement of the light emission bar 124. The length of the light emission bar 124 (for example, the number of light emitting regions 122 constituting the light emission bar 124) is, for example, 20% or more and 70% or less and preferably 25% or more and 35% or less of the length of the light emitting unit 120 (for example, the number of light emitting regions 122 constituting the light emitting unit 120), but is not limited thereto.

### (Boundary Light Emission Pattern)

The boundary light emission pattern is a light emission pattern different from the first light emission pattern and the second light emission pattern. The boundary light emission pattern is a light emission pattern that is not related to the predetermined state of the vehicle. The boundary light emission pattern is a light emission pattern that does not correspond to the predetermined state. In the first embodiment, the boundary light emission pattern is used at the boundary between the first light emission pattern and the second light emission pattern. The boundary light emission pattern has a role of clarifying the boundary between the light emission patterns. The light emission aspect of the boundary light emission pattern can be set in advance by the user.

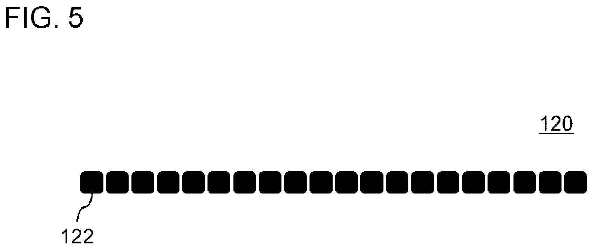

FIG. 5 is a diagram showing an example of the boundary light emission pattern according to the first embodiment. In the first embodiment, the boundary light emission pattern is a light emission pattern in which all of the plurality of light emitting regions 122 are turned on. As another example, the boundary light emission pattern may include at least one of all of the plurality of light emitting regions 122 being turned off, all of the plurality of light emitting regions 122 continuously blinking, and all of the plurality of light emitting regions 122 emitting a specific color.

As still another example, the boundary light emission pattern may include at least one of at least a part of the plurality of light emitting regions 122 being turned off, at least a part of the plurality of light emitting regions 122 being turned on, at least a part of the plurality of light emitting regions 122 continuously blinking, and at least a part of the plurality of light emitting regions 122 emitting a specific color. In a case where the boundary light emission pattern is a state in which at least a part of the plurality of light emitting regions 122 is turned on, the boundary light emission pattern may include, for example, a state in which about 80% of the plurality of light emitting regions 122 are turned on.

The control unit 130 controls the light emitting unit 120 such that the boundary light emission pattern is inserted between the first light emission pattern and the second light emission pattern. In the first embodiment, the control unit 130 may control the light emitting unit 120 such that the boundary light emission pattern is inserted in a case where the light emission color of the light emitting unit 120 corresponding to the first light emission pattern and the light emission color corresponding to the second light emission pattern are colors in the same color family.

In addition, the control unit 130 may determine whether or not the colors are colors in the same color family based on color information defined based on a method of expressing a color using a plurality of colors. The color information defined based on the method of expressing a color using a plurality of colors includes color information expressed by RGB (red, green, and blue) and color information expressed by CMYK (cyan, magenta, yellow, and key plate (black or the like)). In a case where the determination of whether or not the colors are colors in the same color family is performed using the color information expressed by RGB (red, green, and blue), the control unit 130 may determine that the colors are colors in the same color family in a case where the RGB value is within a predetermined reference value.

In addition, the light emitting device 10 can be set to a color vision mode corresponding to each of monochromic color vision, dichromic color vision, and trichromic color vision. The trichromic color vision is a type of color vision in which three main colors (red, green, and blue) can be distinguished. The dichromic color vision is a type of color vision in which it is almost impossible to distinguish one color among the three main colors. The monochromic color vision is so-called total color blindness, and is a state in which there is no sense of color, and is a state in which everything is seen in gray like a black and white photo.

In the first embodiment, the control unit 130 may determine whether or not the colors are colors in the same color family for each of the color vision modes.

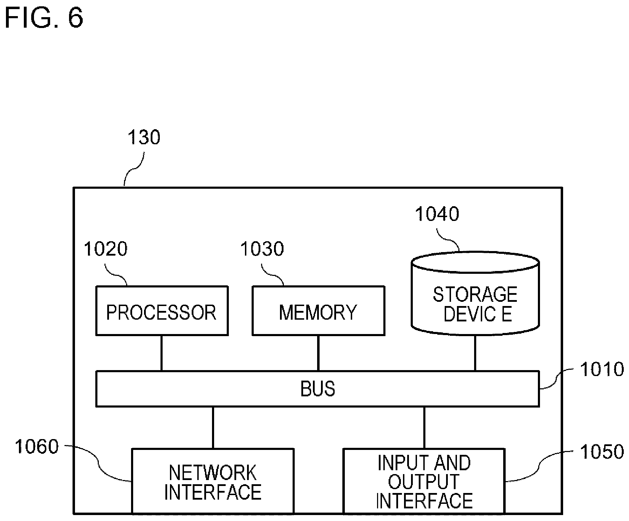

FIG. 6 is a diagram showing a hardware configuration example of the control unit 130. The control unit 130 has a bus 1010, a processor 1020, a memory 1030, a storage device 1040, an input and output interface 1050, and a network interface 1060.

The bus 1010 is a data transmission path for transmitting and receiving data between the processor 1020, the memory 1030, the storage device 1040, the input and output interface 1050, and the network interface 1060. However, a method for connecting the processor 1020 or the like is not limited to bus connection.

The processor 1020 is a processor that is implemented using a central processing unit (CPU), a graphics processing unit (GPU), or the like.

The memory 1030 is a main storage device that is implemented using a random access memory (RAM) or the like.

The storage device 1040 is an auxiliary storage device implemented using a hard disk drive (HDD), a solid state drive (SSD), removable media such as a memory card, a read only memory (ROM), or the like, and has a recording medium. This medium stores program modules for implementing each function of the control unit 130. The processor 1020 reads and executes each of the program modules on the memory 1030, so that each function corresponding to the program module is implemented.

The input and output interface 1050 is an interface for connecting the control unit 130 and various input and output devices to each other. For example, the control unit 130 communicates with the light emitting unit 120 via the input and output interface 1050.

The network interface 1060 is an interface for connecting the control unit 130 to a network. The network is, for example, a local area network (LAN) or a wide area network (WAN). A method for connecting the network interface 1060 to the network may be a wireless connection or a wired connection.

### (Operation Example of First Embodiment)

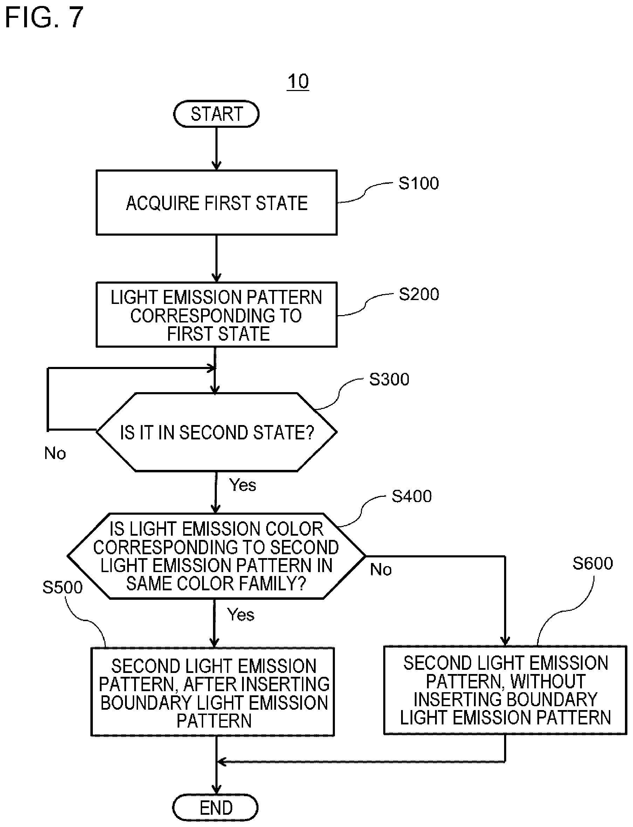

FIG. 7 is a flowchart showing a control example of the control unit 130 according to the first embodiment. A control example of the light emitting unit 120 by the control unit 130 will be described with reference to FIG. 7. In FIG. 7, it is assumed that the driver is traveling straight on the road and then turning right at an intersection.

In step S100, the control unit 130 acquires the current predetermined state of the vehicle as the first state. In the first embodiment, the driver is traveling straight on the road, and there is no information to be notified to the occupant (driver) (steady state). In this case, the control unit 130 acquires the steady state as the first state.

Next, in step S200, the control unit 130 controls the light emitting unit 120 to emit light in the first light emission pattern corresponding to the first state (steady state).

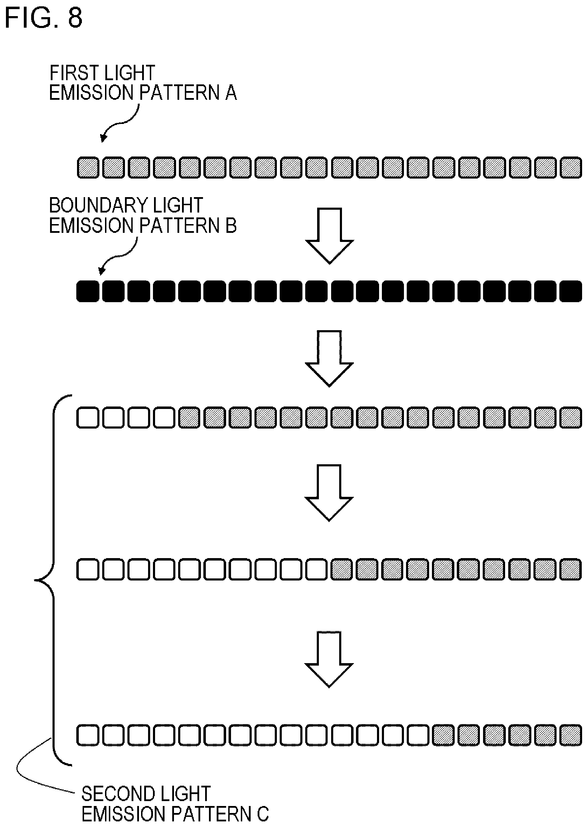

FIG. 8 is a diagram showing control of the light emitting unit 120 according to the operation example of the first embodiment. In the first embodiment, the first light emission pattern A corresponding to the first state (steady state) is a light emission pattern in which all of the light emitting regions 122 of the light emitting unit 120 are turned on. The light emission color of the light emitting unit 120 corresponding to the steady state can be set in advance by the user.

Returning to FIG. 7, in step S300, the control unit 130 determines whether or not the predetermined state of the vehicle is the second state. The second state is a state of the vehicle different from the first state and is a predetermined state of the vehicle following the first state. In a case where the predetermined state of the vehicle is not the second state and remains the first state (steady state in the first embodiment) (NO in step S300), the processing of step S300 is repeated. For example, in a case where the intersection at which the vehicle is to make a right turn is approached and the predetermined state of the vehicle is the second state (state in which the point at which the vehicle is to make a right turn is approached), the control unit 130 determines that the predetermined state of the vehicle is the second state (YES in step S300), and proceeds to step S400.

In step S400, the control unit 130 determines whether or not the light emission color of the light emission pattern (first light emission pattern corresponding to the first state) corresponding to the steady state and the light emission color of the second light emission pattern corresponding to the second state (state in which the point at which the vehicle is to make a right turn is approached) are colors in the same color family. In the first embodiment, for example, in a case where the RGB value in the light emission color of the first light emission pattern corresponding to the first state (steady state) and the RGB value in the light emission color of the second light emission pattern corresponding to the second state are within a predetermined range, the control unit 130 may determine that the colors are colors in the same color family. In a case where the light emission color corresponding to the first state and the light emission color corresponding to the second state are colors in the same color family (YES in step S400), the processing proceeds to step S500.

In step S500, as shown in FIG. 8, the control unit 130 controls the light emitting unit 120 to insert the boundary light emission pattern B and then emit light in the second light emission pattern C. The second light emission pattern C is a light emission pattern indicating that the vehicle is approaching the right turn point, as in FIG. 3. In the first embodiment, the boundary light emission pattern B is a light emission pattern in which all of the plurality of light emitting regions 122 are turned on, as in FIG. 5. In the first embodiment, the light emission color of the boundary light emission pattern B is different from the light emission colors of the first light emission pattern A and the second light emission pattern C. As a result, the occupant can easily distinguish the boundary light emission pattern B from the first light emission pattern A and the second light emission pattern C.

As shown in FIG. 8, in a case where the vehicle is in the steady state (first state), the light emitting unit 120 emits light in the first light emission pattern A corresponding to the first state (steady state), and in a case where the light emission color of the second light emission pattern C corresponding to the second state is the color in the same color family as the light emission color of the first light emission pattern A, the boundary light emission pattern B is inserted (for example, for 0.5 [s]), and then the second light emission pattern C is displayed.

Returning to FIG. 7, in a case where the light emission color of the second light emission pattern corresponding to the second state is not the color in the same color family (NO in step S400), the processing proceeds to step S600. In step S600, the control unit 130 controls the light emitting unit 120 to emit light in the second light emission pattern C without inserting the boundary light emission pattern B as shown in FIG. 8. That is, in step S600, the first light emission pattern A and the second light emission pattern C are continuously emitted in this order.

As described above, the light emitting device 10 according to the first embodiment includes the light emitting unit 120 and the control unit 130. The control unit 130 controls the light emitting unit 120 such that the boundary light emission pattern is inserted between the first light emission pattern corresponding to the first state and the second light emission pattern corresponding to the second state among the predetermined states. By inserting the boundary light emission pattern between the first light emission pattern and the second light emission pattern, the boundary between the first light emission pattern and the second light emission pattern is clarified. As a result, the occupant (particularly, the driver) can easily recognize that the light emission pattern is switched from the first light emission pattern to the second light emission pattern. Therefore, the occupant can easily recognize that the state of the vehicle has changed. Therefore, the situation of the vehicle can be effectively communicated to the occupant.

Furthermore, the light emission color of the boundary light emission pattern may be different from the light emission colors of the first light emission pattern and the second light emission pattern. As a result, the boundary between the first light emission pattern and the second light emission pattern is more clearly defined, so that the occupant (particularly, the driver) can more easily recognize that the light emission pattern is switched from the first light emission pattern to the second light emission pattern.

Furthermore, in the first embodiment, the light emission color of the light emitting unit 120 corresponding to the steady state can be set by the occupant. Therefore, the occupant can set the light emission color of the light emitting unit 120 in the steady state freely (according to preference). However, in a case where the state is switched from the steady state (first state) to the second state, in a case where the light emission color of the light emitting unit 120 in the second light emission pattern corresponding to the second state is the color in the same color family as the light emission color of the light emitting unit 120 in the steady state, the occupant has difficulty recognizing that the state is switched from the steady state to the second state.

However, the control unit 130 according to the first embodiment controls the light emitting unit 120 such that the boundary light emission pattern is inserted in a case where the light emission color of the light emitting unit 120 corresponding to the steady state (first state) and the light emission color corresponding to the second state are colors in the same color family. As a result, the boundary between the first light emission pattern (steady state) and the second light emission pattern (second state) is clarified. As described above, even in a case where the light emission color of the light emitting unit 120 corresponding to the steady state can be freely set by the occupant, the occupant can easily recognize that the state is switched from the steady state (first state) to the second state.

Furthermore, the light emitting device 10 can be set to a color vision mode corresponding to each of monochromic color vision, dichromic color vision, and trichromic color vision, and the control unit 130 may determine whether or not the colors are colors in the same color family for each of the color vision modes.

For example, in dichromic color vision, a person with second color blindness has difficulty discriminating between red and green or between yellow-green and yellow (appears to be colors in the same color family). Therefore, in a case of the dichromic color vision mode, in a case where the light emission color of the light emitting unit 120 in the first light emission pattern is red and the light emission color of the light emitting unit 120 in the second light emission pattern is green, the control unit 130 may determine that the light emission colors are colors in the same color family (in a case of the normal mode, it is assumed that the light emission colors are not determined to be colors in the same color family). Furthermore, in a case where the control unit 130 determines that the colors are colors in the same color family, the control unit 130 may control the light emitting unit 120 such that the light emission color of the light emitting unit 120 in the second light emission pattern is changed from, for example, green to yellow to be a color that is easy to identify for a person with dichromic color vision. As a result, even an occupant with color weakness can easily recognize the difference in the light emission color of the light emitting unit 120.

### <Second Embodiment>

### (Operation Example of Second Embodiment)

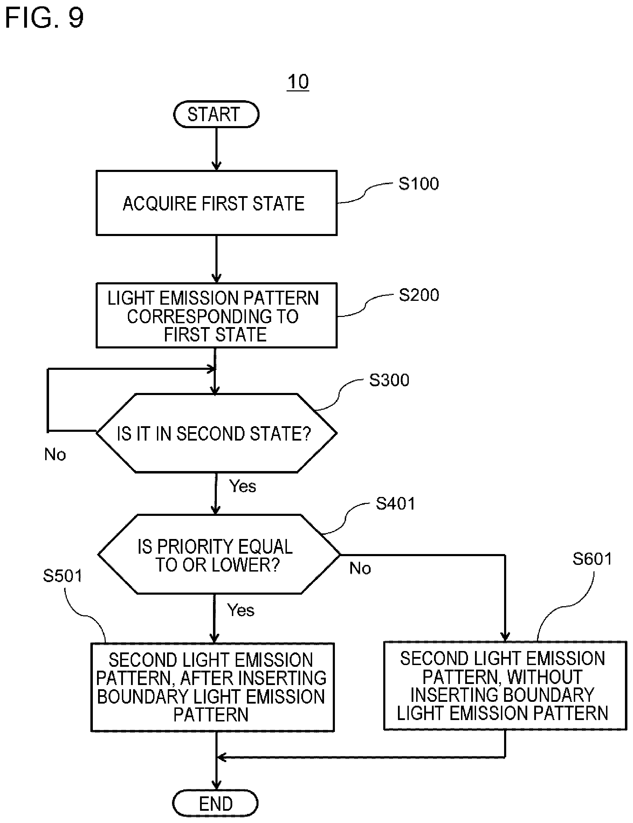

FIG. 9 is a diagram showing control of the light emitting unit 120 according to the operation example of the second embodiment. The functional configuration of the light emitting device 10 according to the second embodiment is the same as that in FIG. 1. In the operation example of the second embodiment, the flow after step S300 is different from that of the first embodiment. In the second embodiment, a priority is set in advance for the first light emission pattern and the second light emission pattern.

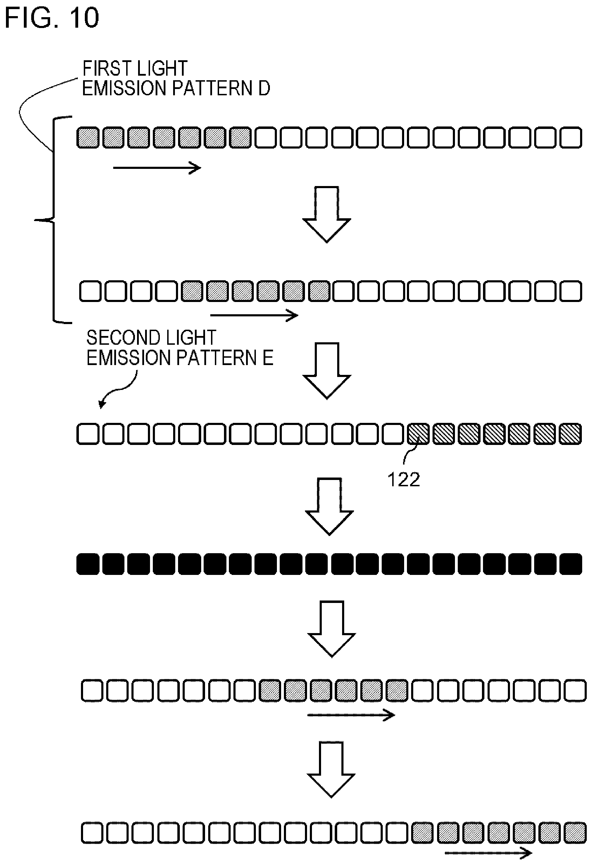

FIG. 10 is a diagram showing a part of the control of the light emitting unit 120 according to the operation example of the second embodiment. In the example of FIG. 10, it is assumed that the driver is approaching the right turn point and another vehicle approaches from the right rear side. The first light emission pattern D in FIG. 10 is a light emission pattern indicating that the vehicle is approaching the right turn point, as in the second light emission pattern C according to the first embodiment (see FIG. 8), but the light emission pattern is cut off in the middle. The second light emission pattern E in FIG. 10 is a light emission pattern in which a plurality of light emitting regions 122 of the right end portion of the light emitting unit 120 emit light in, for example, red indicating a warning. The second light emission pattern E is a light emission pattern in a case where another vehicle approaches from the right rear side with respect to the traveling direction of the vehicle. In this case, for example, it is assumed that the priority of the second light emission pattern E is set higher than the priority of the first light emission pattern D.

Returning to FIG. 9, in step S401 after step S300, the control unit 130 determines whether or not the priority of the second light emission pattern E is equal to or lower than the priority of the first light emission pattern D. As described above, in a case where the priority of the second light emission pattern E in the second embodiment is set higher than the priority of the first light emission pattern D (NO in step S401), the processing proceeds to step S601. In step S601, the control unit 130 controls the light emitting unit 120 such that the boundary light emission pattern is not inserted. As shown in FIG. 10, the boundary light emission pattern is not inserted between the first light emission pattern D and the second light emission pattern E. As described above, in a case where a light emission pattern having a higher priority than the first light emission pattern comes after the first light emission pattern, the boundary light emission pattern is omitted, so that the driver can be immediately notified of the predetermined state having a high priority (urgent).

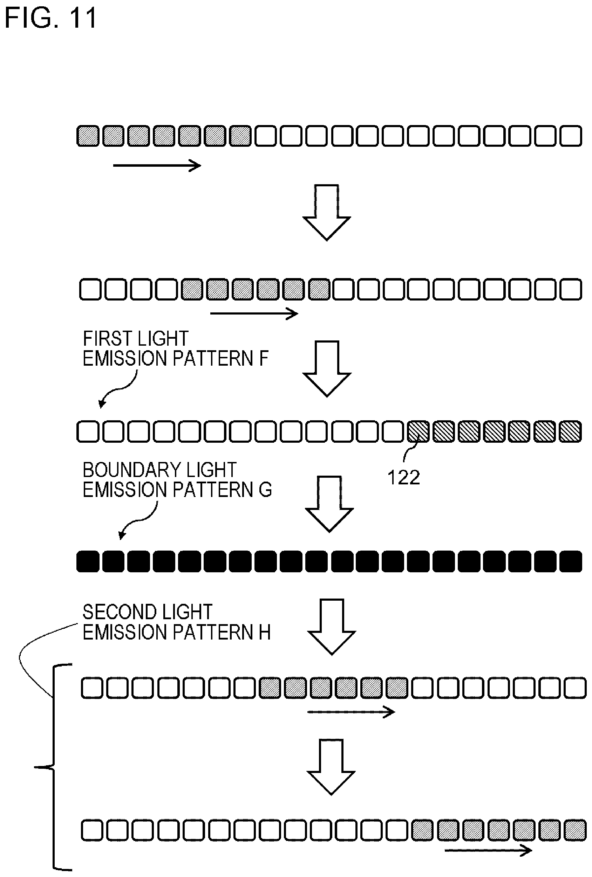

FIG. 11 is a diagram showing another part of the control of the light emitting unit 120 according to the operation example of the second embodiment. The operation example of FIG. 11 is the same as the operation example of FIG. 10, but a portion that defines the first light emission pattern and the second light emission pattern is different. The first light emission pattern F in FIG. 11 is a light emission pattern in a case where another vehicle approaches from the right rear side with respect to the traveling direction of the vehicle, as in the second light emission pattern E in FIG. 10. The second light emission pattern H in FIG. 11 is a light emission pattern indicating that the vehicle is approaching the right turn point. The second light emission pattern H may indicate a continuation of the first light emission pattern D in FIG. 10. In this case, the priority of the second light emission pattern H is set lower than the priority of the first light emission pattern F.

Returning to FIG. 9, in step S401, in a case where it is determined whether or not the priorities of the first light emission pattern F and the second light emission pattern H shown in FIG. 11 are equal or lower, as described above, the priority of the second light emission pattern H in the second embodiment is lower than the priority of the first light emission pattern F, so that the processing proceeds to step S501. In step S501, the control unit 130 controls the light emitting unit 120 such that the boundary light emission pattern G is inserted as shown in FIG. 11. As described above, in a case where a light emission pattern having a lower priority than the first light emission pattern comes after the first light emission pattern, the boundary between the first light emission pattern and the second light emission pattern can be clarified while considering the importance (urgency) by inserting the boundary light emission pattern.

### <Third Embodiment>

### (Operation Example of Third Embodiment)

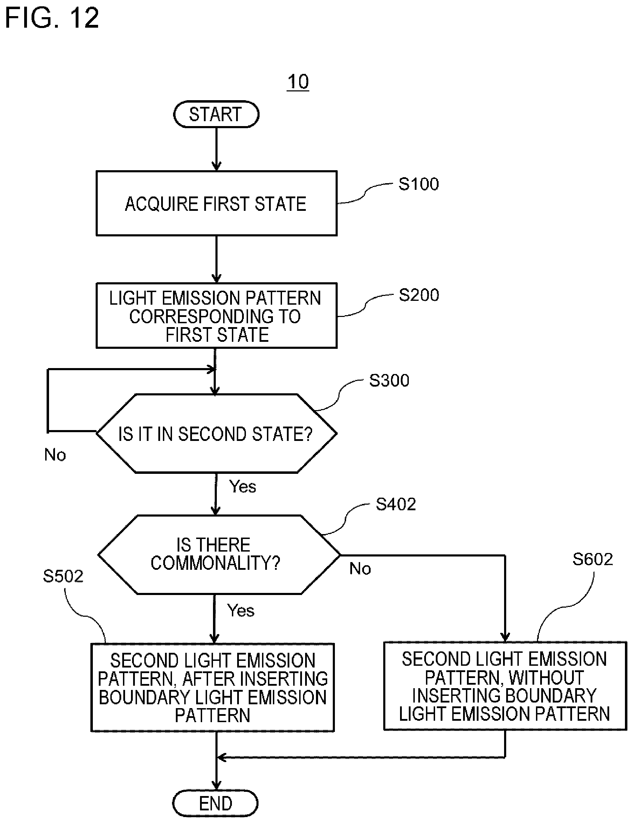

FIG. 12 is a flowchart showing processing of the light emitting device 10 according to the third embodiment. The functional configuration of the light emitting device 10 according to the third embodiment is the same as that in FIG. 1. The flow after step S300 in the operation example of the third embodiment is different from that of the first embodiment.

The control unit 130 according to the third embodiment controls the light emitting unit 120 such that the boundary light emission pattern is inserted in a case where the first light emission pattern and the second light emission pattern have commonality. The "first light emission pattern and the second light emission pattern have commonality" refers to a case where light emission aspects such as the light emission color, the light emission intensity, and the way of selecting the light emitting region 122 to be turned on are the same, of the same type, or similar for the first light emission pattern and the second light emission pattern. The light emission pattern having commonality (same type, similar) is, for example, a light emission pattern in which the light emission bar 124 moves toward the right end of the light emitting unit 120 (right turn) and a light emission pattern in which the light emission bar 124 moves toward the left end of the light emitting unit 120 (left turn). In addition, as another example, the light emission pattern in which only the right side of the light emitting unit 120 is lit (vehicle approaches from the right rear side) and the light emission pattern in which only the left side of the light emitting unit 120 is lit (vehicle approaches from the left rear side) are used.

In step S402 after step S300, the control unit 130 determines whether or not the first light emission pattern and the second light emission pattern have commonality.

In a case where the first light emission pattern and the second light emission pattern have commonality (YES in step S402), the processing proceeds to step S502. In step S502, the control unit 130 controls the light emitting unit 120 such that the boundary light emission pattern is inserted between the first light emission pattern and the second light emission pattern.

In a case where the first light emission pattern and the second light emission pattern do not have commonality (NO in step S402), the processing proceeds to step S602. In step S602, the control unit 130 controls the light emitting unit 120 such that the boundary light emission pattern is not inserted.

As described above, the control unit 130 according to the third embodiment determines whether or not to insert the boundary light emission pattern according to whether or not the first light emission pattern and the second light emission pattern have commonality. As a result, in a case where the light emission pattern is switched to a light emission pattern having a similar light emission aspect, the boundary light emission pattern is inserted, so that the occupant can easily recognize that the light emission pattern is switched, that is, the state of the vehicle is switched.

### <Fourth Embodiment>

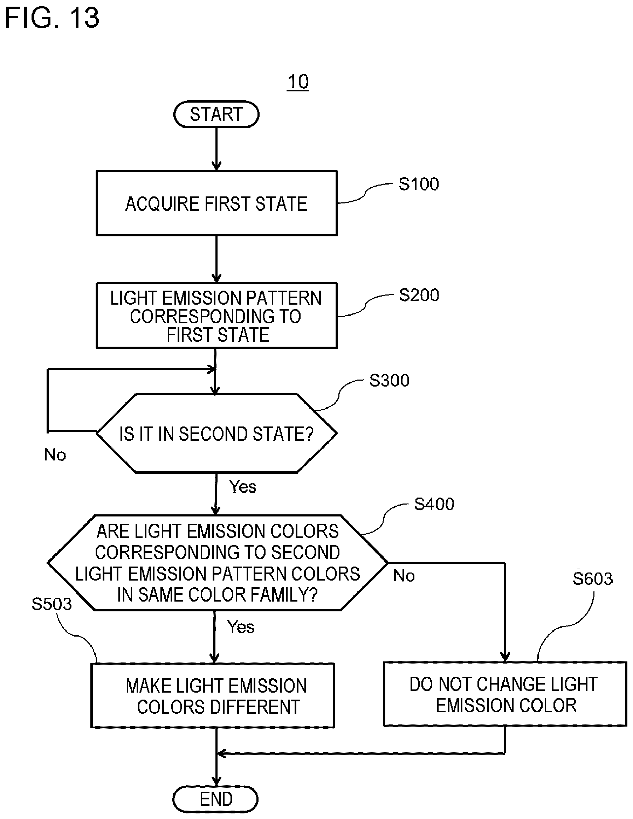

FIG. 13 is a flowchart showing processing of the light emitting device 10 according to the fourth embodiment. The functional configuration of the light emitting device 10 according to the fourth embodiment is the same as that in FIG. 1. The flow after step S400 in the operation example of the fourth embodiment is different from that of the first embodiment. The light emitting unit 120 according to the fourth embodiment emits light in a first light emission pattern corresponding to the first state and a second light emission pattern corresponding to the second state among the predetermined states, in a light emission color corresponding to each pattern. The light emitting unit 120 according to the fourth embodiment does not emit light in the boundary light emission pattern as in the first embodiment.

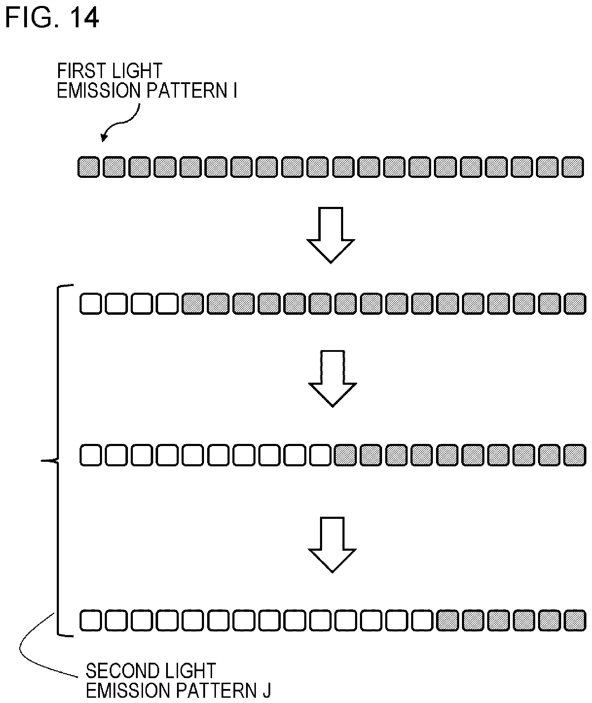

FIG. 14 is a diagram showing control of the light emitting unit 120 according to the operation example of the fourth embodiment. In the example of FIG. 14, a state in which the vehicle traveling straight on the road approaches the intersection at which the vehicle is to make a right turn is shown. The first light emission pattern I in the first state is a light emission pattern in the steady state, and the second light emission pattern J in the second state is a light emission pattern in a case where the vehicle approaches the intersection at which the vehicle is to make a right turn.

Returning to FIG. 13, in step S400, the control unit 130 determines whether or not the light emission color in the first light emission pattern and the light emission color in the second light emission pattern are colors in the same color family.

In a case where the light emission color in the first light emission pattern and the light emission color in the second light emission pattern are colors in the same color family (YES in step S400), the processing proceeds to step S503, and the control unit 130 controls the light emitting unit 120 such that the light emission color in the first light emission pattern and the light emission color in the second light emission pattern are different from each other. For example, in a case where the light emission color in the first light emission pattern I shown in FIG. 14 is green and the light emission color in the second light emission pattern J is also green, the control unit 130 may change the light emission color in the second light emission pattern J to blue to cause the light emitting unit 120 to emit light.

The control unit 130 may change either the light emission color corresponding to the first light emission pattern or the light emission color corresponding to the second light emission pattern. For example, a case where the vehicle travels straight on the road, approaches the intersection at which the vehicle is to make a right turn, and then makes a right turn at the intersection will be described. Since the navigation device can predict that the vehicle approaches the intersection at which the vehicle is to make a right turn and then makes a right turn at the intersection, in a case where the light emission color of the first light emission pattern in a state in which the vehicle approaches the intersection at which the vehicle is to make a right turn and the second light emission pattern in a state in which the vehicle makes a right turn at the intersection are colors in the same color family, the light emission color of the first light emission pattern in a state in which the vehicle approaches the intersection at which the vehicle is to make a right turn may be changed in advance.

Returning to FIG. 13, in a case where the light emission color in the first light emission pattern and the light emission color in the second light emission pattern are not colors in the same color family (NO in step S400), the processing proceeds to step S603, and the control unit 130 does not change the light emission color in the first light emission pattern and the light emission color in the second light emission pattern.

As described above, the control unit 130 according to the fourth embodiment controls the light emitting unit 120 such that the light emission color in the first light emission pattern and the light emission color in the second light emission pattern are different from each other in a case where the light emission color in the first light emission pattern and the light emission color in the second light emission pattern are colors in the same color family. As a result, the occupant can easily recognize that the light emission pattern is switched to the second light emission pattern, so that the change in the situation of the vehicle can be effectively recognized.

Furthermore, at least one of the light emission color in the first light emission pattern and the light emission color in the second light emission pattern may be set in advance. In addition, the first state may be a steady state, and the light emission color in the first light emission pattern corresponding to the steady state may be set in advance. As a result, since the color preferred by the occupant can be reflected, the comfort of driving is improved.

Furthermore, the control unit 130 according to the fourth embodiment may determine whether or not the colors are colors in the same color family using color information (for example, RGB) defined based on the method of expressing a color using a plurality of colors, as in the first embodiment. In addition, in a case where the light emission color in the first light emission pattern and the light emission color in the second light emission pattern are colors in the same color family, the control unit 130 according to the fourth embodiment may control the light emitting unit 120 such that the light emission color in the first light emission pattern and the light emission color in the second light emission pattern are different colors within the range of colors in the same color family.

The "different colors within the range of colors in the same color family" refers to, for example, a color in which the RGB value is within a predetermined range. For example, in a case where the light emission color in the first light emission pattern and the light emission color in the second light emission pattern are green (that is, in a case where both are colors in the same color family), the control unit 130 according to the fourth embodiment may change the light emission color in the second light emission pattern to a light green color in which the RGB value is within a predetermined range. As a result, it is possible to easily recognize that the light emission pattern is switched from the first light emission pattern to the second light emission pattern while maintaining the preference of the occupant.

Furthermore, in a case where the light emission color in the first light emission pattern and the light emission color in the second light emission pattern are colors in the same color family, the control unit 130 according to the fourth embodiment may control the light emitting unit 120 such that the light emission color in the first light emission pattern and the light emission color in the second light emission pattern are different colors outside the range of colors in the same color family.

The "different colors outside the range of colors in the same color family" refers to, for example, a color in which the RGB value is outside a predetermined range. For example, in a case where the light emission color in the first light emission pattern and the light emission color in the second light emission pattern are green (that is, in a case where both are colors in the same color family), the control unit 130 according to the fourth embodiment may change the light emission color in the second light emission pattern to a blue color in which the RGB value is outside a predetermined range. As a result, it is possible to more easily recognize that the light emission pattern is switched from the first light emission pattern to the second light emission pattern.

Furthermore, the control unit 130 according to the fourth embodiment may determine whether or not the colors are colors in the same color family for each of the color vision modes. In addition, in a case where the light emission color in the first light emission pattern and the light emission color in the second light emission pattern are colors in the same color family, the control unit 130 according to the fourth embodiment may control the light emitting unit 120 such that the light emission color in the first light emission pattern and the light emission color in the second light emission pattern are different from each other for each of the color vision modes. As a result, even an occupant with color weakness can easily recognize the difference in the light emission color of the light emitting unit 120.

### <Fifth Embodiment>

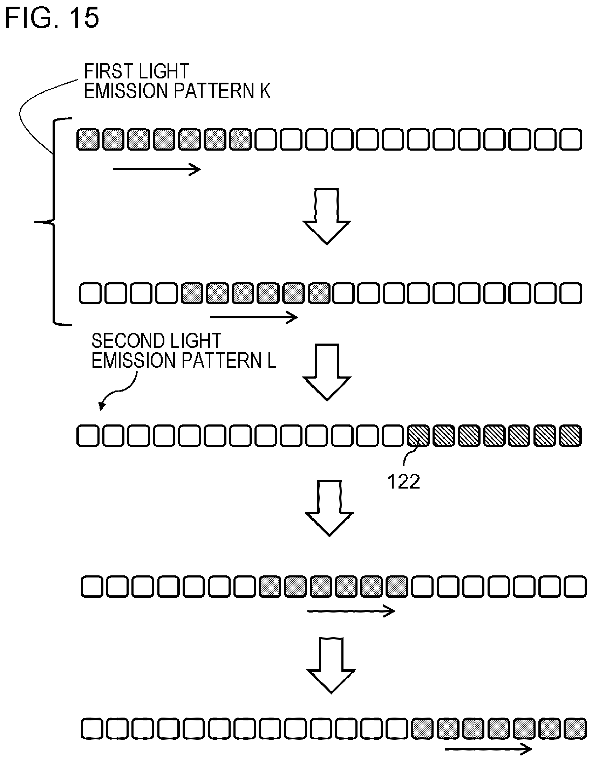

FIG. 15 is a diagram showing an example of control of the light emitting unit 120 according to the fifth embodiment. The functional configuration of the light emitting device 10 according to the fifth embodiment is the same as that in FIG. 1. A priority is set for each of the light emission patterns according to the fifth embodiment. In a case where the predetermined states are simultaneously realized, the control unit 130 according to the fifth embodiment controls the light emitting unit 120 according to the priority. Here, the simultaneity means that, in other words, another predetermined state occurs within a time range from the start to the end of the light emission pattern corresponding to a predetermined state.

In the example shown in FIG. 15, a light emission pattern in a case where another vehicle approaches from the right rear side with respect to the traveling direction of the vehicle is shown in a case where the vehicle approaches the right turn point at the intersection. It is assumed that the priority of the light emission pattern in a case where the vehicle approaches the right turn point is lower than the priority of the light emission pattern in a case where another vehicle approaches from the right rear side with respect to the traveling direction of the vehicle.

As shown in FIG. 15, in a case where the vehicle is in a state (predetermined state) of approaching the right turn point at the intersection, the light emitting unit 120 emits light in a first light emission pattern K. In a case where the vehicle is in a state (predetermined state) in which another vehicle approaches from the right rear side with respect to the traveling direction of the vehicle, the light emitting unit 120 emits light in a second light emission pattern L. In a case where the predetermined states are simultaneously realized, the control unit 130 controls the light emitting unit 120 according to the priority. Specifically, for example, the control unit 130 changes the light emission pattern by allowing the second light emission pattern L having a higher priority than the priority of the first light emission pattern K to be inserted while the light emitting unit 120 emits light in the first light emission pattern K. As a result, the occupant can be immediately notified of the predetermined state having high importance and urgency.

Furthermore, the control unit 130 according to the fifth embodiment may control the light emitting unit 120 such that the boundary light emission pattern is inserted between the first light emission pattern corresponding to the first state and the second light emission pattern corresponding to the second state among the predetermined states, as in the first embodiment.

Furthermore, the control unit 130 according to the fifth embodiment may control the light emitting unit 120 such that the boundary light emission pattern is not inserted in a case where the second light emission pattern having a higher priority than the priority of the first light emission pattern is realized while the light emitting unit 120 emits light in the first light emission pattern, as in the second embodiment.

Furthermore, the control unit 130 according to the fifth embodiment may control the light emitting unit 120 such that the boundary light emission pattern is inserted in a case where the second light emission pattern having a priority equal to or lower than the priority of the first light emission pattern is realized while the light emitting unit 120 emits light in the first light emission pattern, as in the second embodiment.

Furthermore, the control unit 130 according to the fifth embodiment may control the light emitting unit 120 such that the boundary light emission pattern is inserted in a case where the first light emission pattern and the second light emission pattern have commonality, as in the third embodiment.

Furthermore, in the light emission pattern according to the fifth embodiment, the light emission color may be set for each priority. In the fifth embodiment, the light emission color may be determined for each function (steady state, route guidance, warning, and the like) of the vehicle. In addition, the priority may be set for each function. By setting the light emission color for each priority, for example, by setting red as the light emission color of the light emission pattern having a high priority, the occupant can easily recognize the importance and urgency.

Although the embodiments have been described above with reference to the drawings, these are examples of the present invention, and various configurations other than the above can also be adopted.

The vehicle may be an automobile or a two-wheeled vehicle. The light emitting device 10 may be provided outside the vehicle (attachment to a motorcycle).

The light emitting unit 120 may not include the plurality of light emitting regions 122. That is, the light emitting unit 120 may have a configuration including one light emitting region 122.

Hereinafter, examples of the reference forms will be added.
1. A light emitting device provided in a vehicle, including:
   a light emitting unit that emits light in correspondence with predetermined states of the vehicle; and
   a control unit that controls the light emitting unit,
   in which the control unit controls the light emitting unit such that a boundary light emission pattern different from a first light emission pattern corresponding to a first state and a second light emission pattern corresponding to a second state among the predetermined states is inserted between the first light emission pattern and the second light emission pattern.
2. The light emitting device according to 1.,
   in which the light emitting unit includes a plurality of light emitting regions, and
   the boundary light emission pattern includes at least one of a state in which at least a part of the plurality of light emitting regions is turned off, a state in which at least a part of the plurality of light emitting regions is turned on, a state in which at least a part of the plurality of light emitting regions is continuously blinking, and a state in which at least a part of the plurality of light emitting regions emits a specific color.
3. The light emitting device according to 2.,
   in which the boundary light emission pattern includes at least one of a state in which all of the plurality of light emitting regions are turned off, a state in which all of the plurality of light emitting regions are turned on, a state in which all of the plurality of light emitting regions are continuously blinking, and a state in which all of the plurality of light emitting regions emit the specific color.
4. The light emitting device according to any one of 1. to 3.,
   in which a light emission color of the boundary light emission pattern is different from light emission colors of the first light emission pattern and the second light emission pattern.
5. The light emitting device according to any one of 1. to 4.,
   in which the first state includes a steady state in which there is no information to be notified to an occupant of the vehicle, a light emission color of the light emitting unit corresponding to the steady state is settable, and
   the control unit controls the light emitting unit such that the boundary light emission pattern is inserted in a case where the light emission color of the light emitting unit corresponding to the steady state and a light emission color corresponding to the second state are colors in the same color family.
6. The light emitting device according to 5.,
   in which the control unit determines whether or not the colors are colors in the same color family using color information defined based on a method of expressing a color using a plurality of colors.
7. The light emitting device according to 5. or 6.,
   wherein the light emitting device can be set to a color vision mode corresponding to each of monochromic color vision, dichromic color vision, and trichromic color vision, and
   the control unit determines whether or not the colors are colors in the same color family for each of the color vision modes.
8. The light emitting device according to any one of 1. to 7.,
   in which priorities are set in advance for the first light emission pattern and the second light emission pattern, and
   the control unit controls the light emitting unit such that the boundary light emission pattern is inserted in a case where the priorities are equal to or lower.
9. The light emitting device according to any one of 1. to 8.,
   in which priorities are set in advance for the first light emission pattern and the second light emission pattern, and
   the control unit controls the light emitting unit such that the boundary light emission pattern is not inserted in a case where the priority of the second light emission pattern is higher than the priority of the first light emission pattern.
10. The light emitting device according to any one of 1. to 9.,
   in which the control unit controls the light emitting unit such that the boundary light emission pattern is inserted in a case where the first light emission pattern and the second light emission pattern have commonality.
11. A control method of a light emitting device provided in a vehicle, the light emitting device including a light emitting unit that emits light in correspondence with predetermined states of the vehicle, the control method comprising:
   controlling, by a computer, the light emitting unit such that a boundary light emission pattern different from a first light emission pattern corresponding to a first state and a second light emission pattern corresponding to a second state among the predetermined states is inserted between the first light emission pattern and the second light emission pattern.
12. A program for controlling a light emitting device provided in a vehicle, the program causing a computer to control the light emitting unit such that a boundary light emission pattern different from a first light emission pattern corresponding to a first state and a second light emission pattern corresponding to a second state among the predetermined states is inserted between the first light emission pattern and the second light emission pattern.

### REFERENCE SIGNS LIST

10 light emitting device
110 display
120 light emitting unit
122 light emitting region
124 light emission bar
130 control unit

## Claims

1. A light emitting device provided in a vehicle, comprising:
a light emitting unit that emits light in correspondence with predetermined states of the vehicle; and
a control unit that controls the light emitting unit,
wherein the control unit controls the light emitting unit such that a boundary light emission pattern different from a first light emission pattern corresponding to a first state and a second light emission pattern corresponding to a second state among the predetermined states is inserted between the first light emission pattern and the second light emission pattern.

2. The light emitting device according to claim 1,
wherein the light emitting unit includes a plurality of light emitting regions, and
the boundary light emission pattern includes at least one of a state in which at least a part of the plurality of light emitting regions is turned off, a state in which at least a part of the plurality of light emitting regions is turned on, a state in which at least a part of the plurality of light emitting regions is continuously blinking, and a state in which at least a part of the plurality of light emitting regions emits a specific color.

3. The light emitting device according to claim 2,
wherein the boundary light emission pattern includes at least one of a state in which all of the plurality of light emitting regions are turned off, a state in which all of the plurality of light emitting regions are turned on, a state in which all of the plurality of light emitting regions are continuously blinking, and a state in which all of the plurality of light emitting regions emit the specific color.

4. The light emitting device according to any one of claims 1 to 3,
wherein a light emission color of the boundary light emission pattern is different from light emission colors of the first light emission pattern and the second light emission pattern.

5. The light emitting device according to any one of claims 1 to 3,
wherein the first state includes a steady state in which there is no information to be notified to an occupant of the vehicle,
a light emission color of the light emitting unit corresponding to the steady state is settable, and
the control unit controls the light emitting unit such that the boundary light emission pattern is inserted in a case where the light emission color of the light emitting unit corresponding to the steady state and a light emission color corresponding to the second state are colors in the same color family.

6. The light emitting device according to claim 5,
wherein the control unit determines whether or not the colors are colors in the same color family using color information defined based on a method of expressing a color using a plurality of colors.

7. The light emitting device according to claim 5,
wherein the light emitting device can be set to a color vision mode corresponding to each of monochromic color vision, dichromic color vision, and trichromic color vision, and
the control unit determines whether or not the colors are colors in the same color family for each of the color vision modes.

8. The light emitting device according to any one of claims 1 to 3,
wherein priorities are set in advance for the first light emission pattern and the second light emission pattern, and
the control unit controls the light emitting unit such that the boundary light emission pattern is inserted in a case where the priorities are equal to or lower.

9. The light emitting device according to any one of claims 1 to 3,
wherein priorities are set in advance for the first light emission pattern and the second light emission pattern, and
the control unit controls the light emitting unit such that the boundary light emission pattern is not inserted in a case where the priority of the second light emission pattern is higher than the priority of the first light emission pattern.

10. The light emitting device according to any one of claims 1 to 3,
wherein the control unit controls the light emitting unit such that the boundary light emission pattern is inserted in a case where the first light emission pattern and the second light emission pattern have commonality.

11. A control method of a light emitting device provided in a vehicle, the light emitting device including a light emitting unit that emits light in correspondence with predetermined states of the vehicle, the control method comprising:
controlling, by a computer, the light emitting unit such that a boundary light emission pattern different from a first light emission pattern corresponding to a first state and a second light emission pattern corresponding to a second state among the predetermined states is inserted between the first light emission pattern and the second light emission pattern.

12. A program for controlling a light emitting device provided in a vehicle, the light emitting device including a light emitting unit that emits light in correspondence with predetermined states of the vehicle, the program causing a computer to control the light emitting unit such that a boundary light emission pattern different from a first light emission pattern corresponding to a first state and a second light emission pattern corresponding to a second state among the predetermined states is inserted between the first light emission pattern and the second light emission pattern.
